# EUROPEAN PATENT APPLICATION

(11) **EP 2 093 470 A1**
(43) Date of publication of application: **26.08.2009**
(21) Application number: 07831210.5
(22) Date of filing: 05.11.2007
(51) Int. Cl.: F16L 33/22

(54) **HOSE JOINT**

(30) Priority: 21.11.2006 JP 2006314073
(71) Applicant: Toyox Co., Ltd., Kurobe-shi Toyama 9380806 (JP)
(72) Inventor: Inoue, Hajime, Tokyo 1160002 (JP)
(74) Representative: Wood, Graham
(86) International application number: PCT/JP2007/071477
(87) International publication number: WO 2008/062654

(57) **Abstract**

The invention completely prevents a twist of a hose in accordance with a fastening.

A loosely fitting portion (4) is rotatably fitted along an outer peripheral surface (1b) of a nipple (1), the loosely fitting portion (4) and a sleeve (2) are independently attached so as to be immovable in an axial direction, and a fastening member (3) is screwed on an outer peripheral surface of the loosely fitting portion (4) so as to be movable in the axial direction toward the sleeve (2).

Accordingly, if the fastening member (3) is pulled in a fastening direction without rotating while only rotating the loosely fitting portion (4), after attaching a hose (H) along an outer peripheral surface (1a) of the nipple (1), the sleeve (2) is reduced in diameter accordingly without being exposed to a rotating force, and the hose (H) is closely attached in its inner peripheral surface (H1) to the outer peripheral surface (1a) of the nipple (1) without being exposed to an external force caused by a rotational friction at all.

## Description

### Technical Field

The present invention relates to a hose joint used for a pipe connection of a hose through which a liquid such as water, oil or the like, a gas such as air or the like, and a fluid such as a pulverulent body or the like passes.
In detail, the present invention relates to the hose joint attaching the hose along an outer peripheral surface of a nipple, putting a fastening member on an outer periphery via a sleeve, and closely attaching an inner peripheral surface of the hose to an outer peripheral surface of the nipple by reducing diameter of the sleeve in accordance with a movement in an axial direction of the fastening member.

### Background Art

Conventionally, as this kind of hose joint, there is a configuration in which a polygonal collar portion forming a catch of a rotational driving tool such as a spanner or the like is provided on a peripheral surface of a joint main body continuously formed on a base end side in an axial direction of a nipple (a tube attaching shaft) and a male thread portion (a thread groove surface) is formed thereon, a slip stop knurling is provided on an outer peripheral surface of a fastening member (a fastening crest), a female thread portion (a thread groove surface) is formed on an inner peripheral surface on a base end side of the fastening member, an inclined inner surface (a taper inner surface) formed on an inner peripheral surface on a leading end side of the fastening member presses a taper surface formed on an outer peripheral surface of a sleeve (a fastening ring) so as to reduce diameter by rotating the fastening member after engaging the male thread portion with the female thread portion, and screwing in an axial direction toward the collar portion arranged on a base end side of the male thread portion, thereby closely attaching an inner peripheral surface of a hose (a tube) to an outer peripheral surface of the nipple (for example, refer to Patent Document 1).

Patent Document 1: Japanese Utility Model Publication No. 57-36874 (pages 1 to 2, Figs. 1 to 3)

### Disclosure of the Invention

However, in the conventional hose joint mentioned above, if the sleeve is reduced in diameter so as to be brought into pressure contact with the hose on the basis of the rotating operation of the fastening member with respect to the nipple, the fastening member and the sleeve are integrated with the hose on the basis of a friction resistance generated therebetween. Accordingly the hose is rotated and twisted in a peripheral direction with respect to the outer peripheral surface of the nipple in accordance with the rotating operation of the thereafter rotating operation of the fastening member, whereby there is a case that the hose is kept connected in a twisted state.
If the hose is twisted as mentioned above, the hose itself is damaged so as to tend to be broken. In addition, if an internal pressure is applied to the hose by passing a fluid into the connected hose, the hose is exposed to such a load that the hose is returned to a direction opposite to the twisted direction.
Accordingly, the hose is subject to a further damage, and there is therefore a problem that a service life of the hose becomes short and the hose cannot be stably used for a long term.

In the present invention, the invention in accordance with claim 1 aims to completely prevent a twist of a hose in accordance with a fastening.
The invention in accordance with claim 2 aims to simplify a positioning structure of a sleeve and a loosely fitting portion, in addition to the object of the invention in accordance with claim 1.
The invention in accordance with claim 3 aims to easily carry out a fastening work of the hose, in addition to the object of the invention in accordance with claim 1 or 2.

In order to achieve the object mentioned above, in accordance with claim 1 of the present invention, there is provided a hose joint in which a loosely fitting portion is rotatably fitted along an outer peripheral surface of a nipple, the loosely fitting portion and a sleeve are independently attached so as to be immovable in an axial direction, and a fastening member is screwed on an outer peripheral surface of the loosely fitting portion so as to be movable in an axial direction toward the sleeve.
In accordance with claim 2, in the configuration of the invention in accordance with claim 1, a fastening member engaging with the sleeve and the loosely fitting portion in the axial direction is attached to the outer peripheral surface of said nipple, and the sleeve and the loosely fitting portion are locked so as to be respectively immovable in the axial direction.
In accordance with claim 3, in the configuration of the invention in accordance with claim 1 or 2, a rotational operating portion is formed on an exposed outer periphery of said loosely fitting portion.

In accordance with the first aspect of the present invention, the loosely fitting portion is rotatably fitted along the outer peripheral surface of the nipple, the loosely fitting portion and the sleeve are independently attached so as to be immovable in the axial direction, and the fastening member is screwed on the outer peripheral surface of the loosely fitting portion so as to be movable in the axial direction toward the sleeve.
Accordingly, if the fastening member is pulled in the fastening direction without rotating while only rotating the loosely fitting portion, after attaching the hose along the outer peripheral surface of the nipple, the sleeve is reduced in diameter accordingly without being exposed to the rotating force, and the hose is closely attached in its inner peripheral surface to the outer peripheral surface of the nipple without being exposed to the external force caused by the rotational friction at all.
Accordingly, it is possible to completely prevent the hose from being twisted in accordance with the fastening.
As a result, in comparison with the conventional configuration in which the hose is twisted with respect to the outer peripheral surface of the nipple on the basis of the rotational friction of the fastening member and the sleeve, the damage caused by the twist of the hose itself is reduced, and no load is applied to the hose even if the internal pressure is applied within the hose on the basis of the fluid pass.
Therefore, a service life of the hose becomes long, and the hose can be stably used for a long term.

In accordance with claim 2, in addition to the effect of the invention in accordance with claim 1, since the fastening member engaging with the sleeve and the loosely fitting portion in the axial direction is attached to the outer peripheral surface of the nipple, the sleeve and the loosely fitting portion are locked by the fastening member so as to be respectively immovable in the axial direction.
Accordingly, it is possible to simplify a positioning structure of the sleeve and the loosely fitting portion.
As a result, it is possible to reduce a manufacturing cost of the hose joint.

In accordance with claim 3, in addition to the effect of the invention in accordance with claim 1 or 2, since the rotational operating portion is formed on the outer periphery of the loosely fitting portion, only the loosely fitting portion can be rotated regardless of the fastening member.
Accordingly, it is possible to easily carry out the fastening work of the hose.

### Brief Description of the Drawings

Fig. 1 is a front elevational view of a hose joint showing an embodiment 1 in accordance with the present invention, and shows a main portion with parts broken away for the sake of clarity;
Fig. 2 is a scale-reduced front elevational view showing an exploded state of the hose joint with parts broken away for the sake of clarity;
Fig. 3 is a front elevational view of a hose joint showing an embodiment 2 in accordance with the present invention, and shows a main portion with parts broken away for the sake of clarity;
Fig. 4 is a longitudinal cross sectional side elevational view along a line 4-4 in Fig. 3;
Fig. 5 is a front elevational view of a hose joint showing an embodiment 3 in accordance with the present invention, and shows a main portion with parts broken away for the sake of clarity; and
Fig. 6 is a vertical cross sectional side elevational view along a line 6-6 in Fig. 5.

### Best Mode for Carrying Out the Invention

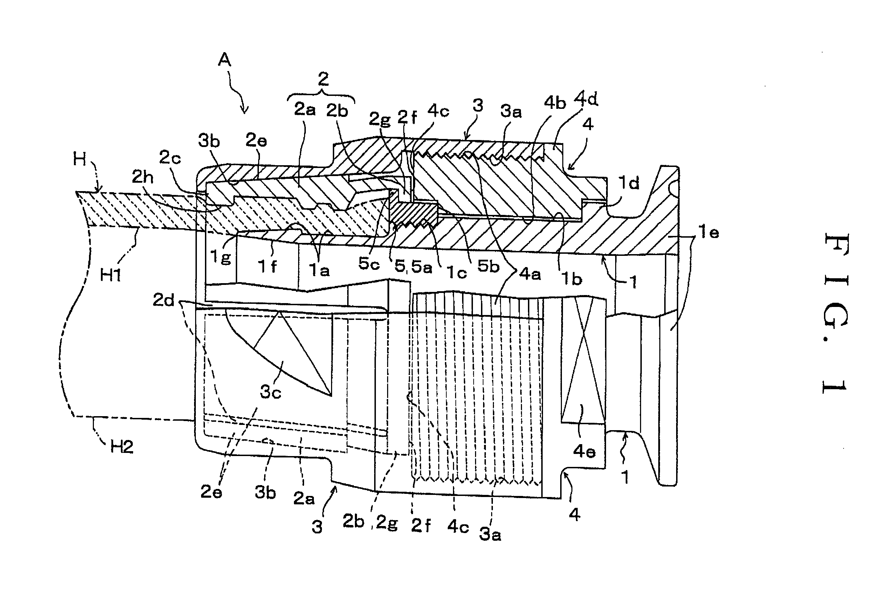

A hose joint A in accordance with the present invention is constituted, as shown in Figs. 1 to 6, by a nipple 1 to which a connection end portion of a hose H is attached, a sleeve 2 put on an outer periphery of the attached hose H, a fastening member 3 arranged on an outer side of the sleeve 2, and a loosely fitting portion 4 interposed between the fastening member 3 and the nipple 1, and is configured such as to reduce diameter of the sleeve 2 within a pressure inner surface 3b without rotating so as to closely attaching an inner peripheral surface H1 of the connection end portion of the hose H to an outer peripheral surface 1a of the nipple 1 by respectively independently attaching the loosely fitting portion 4 and the sleeve 2 so as to be immovable in an axial direction, respectively forming thread portions 3a and 4a over the fastening member 3 and the loosely fitting portion 4 so as to engage them in such a manner as to be movable in an axial direction with each other, and pulling the fastening member 3 in a fastening direction without rotating only on the basis of a rotating operation of the loosely fitting portion 4.

The nipple 1 is formed in an substantially cylindrical shape by a hard rusting metal material, for example, a stainless steel or the like, and is configured such that an outer peripheral surface 1a on a leading end side (a left side in Fig. 1) in the axial direction heading for the hose H is formed as a guide portion to which the connection end portion of the hose H is attached, and an outer peripheral surface 1b on a base end side (a right side in Fig. 1) in the opposite axial direction is formed as a slidable contact surface opposing to an inner surface 4b of the loosely fitting portion 4.
It is preferable that a come-off stop portion of the hose H is provided by forming an annular projection extending in a peripheral direction as in an illustrated embodiment in the guide portion formed on the leading end side outer peripheral surface 1a.
Further, as an other aspect, the configuration may be made such that a bamboo shoot shaped hose come-off stop portion is provided by alternately forming a plurality of annular projections and annular grooves in the axial direction.

The sleeve 2 is constituted by a pressure tubular portion 2a formed on a leading end side in the axial direction and elastically deformable in a radial direction, and an annular portion 2b formed in a base end side in the axial direction, by using an elastically deformable nonmetal material, for example, a fluorine resin or other synthetic resins which are excellent in a slip characteristic and a heat resistance, and the annular portion 2b is attached to an intermediate outer peripheral surface 1c in the axial direction of said nipple 1 by a stopper tool 5 or the like so as to be rotatable and immovable in the axial direction.

An inner diameter of the pressure tubular portion 2a of the sleeve 2 is formed slightly larger than an outer diameter of the hose H attached to the leading end side outer peripheral surface 1a of the nipple 1, and a plurality of screw slottings 2d extending in the axial direction from the leading end edge 2c in the axial direction are notched in a peripheral direction, whereby if the pressure inner surface 3b of the fastening member 3 mentioned below comes into contact with the outer peripheral surface of the pressure tubular portion 2a so as to be pressurized to an inner side, the screw slottings 2d come close to each other so as to be smoothly reduced in diameter at the same time of being bent to an inner side in the diametrical direction.
In this case, it is preferable to notch a slit (not shown) in the annular portion 2b of the sleeve 2 so as to be capable of expanding diameter, for the purpose of attaching to the stopper tool 5 mentioned below or the like.

A whole of the sleeve 2 is smoothly inserted into the fastening member 3 without catching on in the process by forming a tapered chamfer 2e on a leading end side outer surface of the pressure tubular portion 2a so as to oppose to the pressure inner surface 3b of the fastening member 3 mentioned below.

The fastening member 3 corresponding to a nut which is formed in a cylindrical shape by a hard rusting metal material, for example, a stainless steel or the like, and is provided with the female thread portion 3a comprising one of said thread portion on a base end side inner peripheral surface in the axial direction thereof, and forms the pressure inner surface 3b in which an inner diameter reduces in a taper shape toward a leading end side in opposition to the pressure tubular portion 2a of said sleeve 2, on an inner side on the leading end side in the axial direction.

Further, on the outer peripheral surface of the fastening member 3, it is preferable that a plurality of flat surface portions with which the tool is engaged, for example, as in the illustrated embodiment, are formed as the rotation regulating portion 3c in the circumferential direction, at an appropriate interval, or a concavo-convex potion such as a knurling or the like is formed.

The loosely fitting portion 4 is formed in a cylindrical shape by a hard nonmetal material, a male thread portion 4a comprising the other of said thread portion is provided on an outer peripheral surface thereof, an inner diameter of the loosely fitting portion 4 is formed so as to have a slightly larger diameter than an outer diameter of the base end side outer peripheral surface 1b of said nipple 1, and an inner surface 4b is fitted along the nipple base end side outer peripheral surface 1b in a loosely fitting manner, and is attached by the stopper device 5 mentioned below or the like so as to be rotatable and be immovable in the axial direction.
In this attached state, for example, as in the illustrated embodiment, it is preferable that a rotation of the loosely fitting portion 4 is not transmitted to said sleeve 2 by arranging in such a manner as to form a space between the leading end surface 4c in the axial direction of the loosely fitting portion 4 and the base end surface 2f in the axial direction of the annular portion 2b of the sleeve 2.

Further, it is preferable that an exposed base end outer peripheral surface of the loosely fitting portion 4 is provided with a stopper 4d opposing to the base end surface 3d of said fastening member 3 as occasion demands in a protruding manner, a plurality of flat surface portions with which a tool or the like is engaged, for example, as in the illustrated embodiment, are formed as a rotation operating portion 4e at an appropriate interval in a peripheral direction, or a concavo-convex portion such as a knurling or the like is formed.

On the other hand, it is preferable that said hose H is configured, for example, by a soft synthetic resin such as a vinyl chloride or the like or a soft material such a silicone rubber or the like, and an inner peripheral surface H1 and an outer peripheral surface H2 are flat.
As a specific example, there are employed a laminated hose (a braid hose) in which a plurality of or single synthetic resin braid (reinforcing yarn) is spirally embedded as an intermediate layer between transparent or opaque outer layer and inner layer, a spiral reinforced hose (Vohran hose) which is integrated by spirally winding a band-like reinforcing material made of a synthetic resin or a metal and having a rectangular cross sectional shape or the like and a linear reinforcing material such as a circular cross sectional shape or the like as an intermediate layer, a braid reinforced hose in which a yarn-like reinforcing material, for example, a glass fiber, a fire retardant fiber or the like is braided on a hose outer peripheral surface, a spiral reinforced hose in which a metal wire rod or a hard synthetic resin wire rod is embedded spirally, a soft synthetic resin hose having a single layer structure, and the like.
A description will be given below of each of the embodiments in accordance with the present invention with reference to the accompanying drawings.

### Embodiment 1

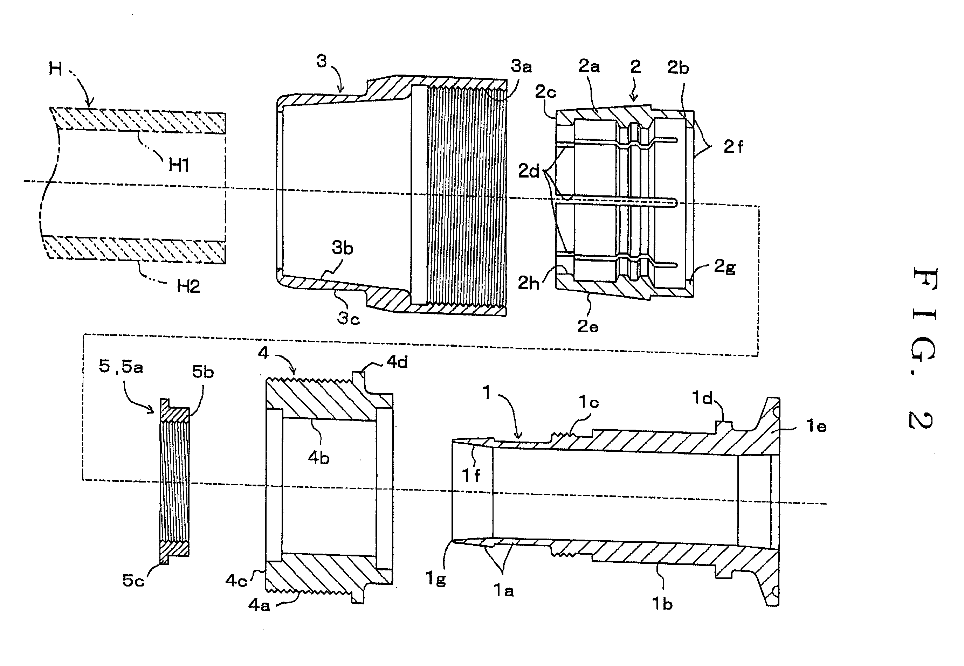

An embodiment 1 shows a case that the sleeve 2 and the loosely fitting portion 4 are respectively locked so as to be immovable in the axial direction, by attaching the stopper tool 5 engaging with the sleeve 2 and the loosely fitting portion 4 in the axial direction, to the intermediate outer peripheral surface 1c of said nipple 1, as shown in Figs. 1 and 2.

In the case of the illustrated embodiment showing the stopper tool 5, the loosely fitting portion 4 is positioned so as to be rotatable and immovable in the axial direction with respect to the base end side outer peripheral surface 1b of the nipple 1 by screw attaching the screw stopper 5a to the intermediate outer peripheral surface 1c of the nipple 1, and sandwiching the loosely fitting portion 4 between a base end portion 5b in the axial direction and the locking projection 1d provided in a protruding manner on the base end side in the axial direction of the nipple 1 in the axial direction.
Further, said sleeve 2 is positioned so as to be immovable in the axial direction by engaging a locking projection 5c provided in a protruding manner in an outer peripheral end of the screw stopper 5a with a hook-shaped locking portion 2g formed in the annular portion 2b of the sleeve 2 in the axial direction.

A thread direction of the screw stopper 5a and the intermediate outer peripheral surface 1c of the nipple 1 is set so as to prevent the rotating operations of said fastening member 3 and the loosely fitting portion 4 from directly affecting the screw attachment of the screw stopper 5a, whereby a slack is generated and the loosely fitting portion 4 and the sleeve 2 are displaced or come off, by being set to an opposite direction to a thread direction of the thread portions 3a and 4a formed over the fastening member 3 and the loosely fitting portion 4.

Further, in the illustrated embodiment, a connecting portion 1e for connecting to other devices is integrally provided in a protruding manner in the base end in the axial direction of the nipple 1; however, a shape thereof is not limited to the illustrated embodiment, but may employ an other structure in correspondence to an intended use.

Next, a description will be given of an assembling method of the hose joint A mentioned above, and an operation and effect thereof.
First, the connection end portion of the hose H is attached to the leading end side outer peripheral surface 1a of the nipple 1, the sleeve 2 is put on the outer periphery of the attached hose H, and the annular portion 2b is locked to the intermediate outer peripheral surface 1c in the axial direction of the nipple 1 by the stopper 5 so as to be immovable in the axial direction.

Thereafter, the fastening member 3 is put on the outer side of the sleeve 2, and the inner peripheral thread portion 3a is engaged with the outer peripheral thread portion 4a of the loosely fitting portion 4 fitted along the base end side outer peripheral surface 1b of the nipple 1 in a loosely fitting manner.
In the rotating operation of the fastening member 3 in this set state, since the sleeve 2 is not reduced in diameter by the pressure inner surface 3b, the external force caused by the rotational friction is not applied to the hose H, and a twist is not generated.

Further, in this state, the rotation regulating portion 3c of the fastening member 3 is engaged by a tool or the like and is supported so as to be non-rotatable only in the peripheral direction; however, the rotation operating portion 4e of the loosely fitting portion 4 is engaged by a tool or the like so as to be rotationally operated while supporting so as to be movable in the axial direction.

Accordingly, the fastening member 3 engaging with the loosely fitting portion 4 is only pulled in while fastening the sleeve 2 in the axial direction, thereby reducing diameter of the sleeve 2 by the pressure inner surface 3b without any application of the rotating force, so that the hose H is not exposed to the external force caused by the rotational friction at all, the inner peripheral surface H1 thereof is pressed gradually to the leading end side outer peripheral surface 1a of the nipple 1, and the hose inner peripheral surface H1 is finally attached closely to the leading end side outer peripheral surface 1a of the nipple 1.
As a result, it is possible to fasten and connect the hose H going with the fastening without being twisted.

Further, since the stopper tool 5 engaging with the sleeve 2 and the loosely fitting portion 4 in the axial direction is attached to the intermediate outer peripheral surface 1c of the nipple 1, and the sleeve 2 and the loosely fitting portion 4 are respectively locked by the stopper tool 5 so as to be immovable in the axial direction, it is possible to simplify the positioning structure of the sleeve 2 and the loosely fitting portion 4 so as to be easily disassembled and cleaned, and there is obtained an advantage that a manufacturing cost can be reduced.

Further, as occasion demands, as shown in the drawings, it is possible to form an annular convex portion 2h on an inner surface of the pressure tubular portion 2a of said sleeve 2 at least on a leading end side in the axial direction, thereby increasing a frictional resistance with a connection end portion outer peripheral surface H2 of the hose H, and to form an inverse taper surface 1f increased in diameter toward the leading end on an inner peripheral surface of a leading end of said nipple 1, thereby protruding the leading end edge 2c in the axial direction of the sleeve 2 in a fastened state in comparison with the leading end edge 1g of the nipple 1.
Accordingly, the hose H can be pressed at the leading end side annular convex portion 2h of the sleeve 2 toward inside in a radial direction, thereby connecting the inner end portion H2 to the inverse taper surface 1f.

In accordance with this configuration, there is an advantage that a step is not formed between the leading end inner peripheral surface of the nipple 1 and the inner end portion H2 of the hose H, and a propellant fouling forming a bleeding ground of various fungi due to a liquid pool can be dissolved particularly in the case that a fluid (a liquid) passing through an inner side of the hose H is constituted by food. Embodiment 2

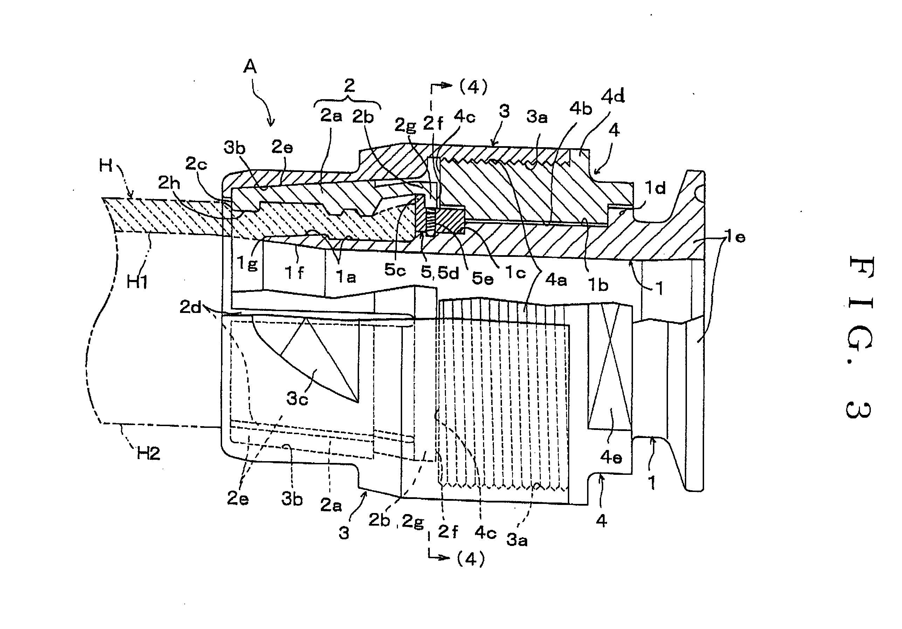

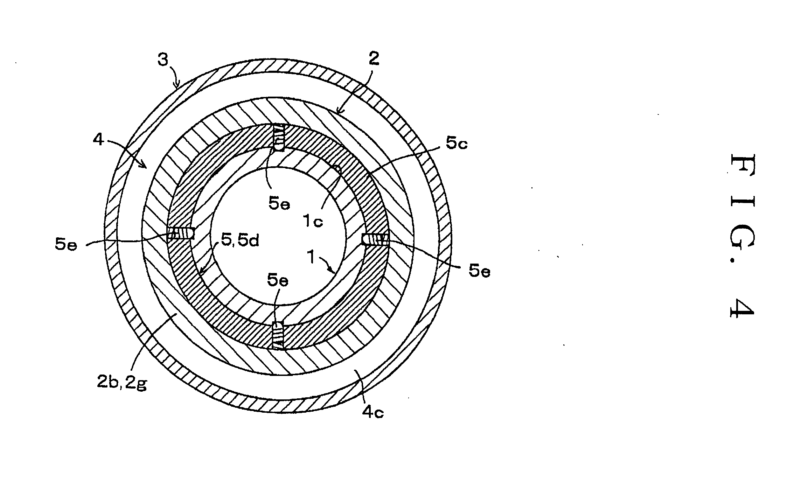

An embodiment 2 is different from the embodiment 1 shown in Figs. 1 and 2 in a configuration in which said loosely fitting portion 4 and said sleeve 2 are respectively positioned so as to be immovable in the axial direction by firmly attaching a locking ring 5d in place of the screw stopper 5a as said stopper 5 to the intermediate outer peripheral surface 1c of the nipple 1, as shown in Figs. 3 and 4, and is the same as embodiment 1 shown in Figs. 1 and 2 for the rest of the configuration.

In the case of the illustrated embodiment, the locking ring 5d is provided with the fastening part 5e, for example, a screw, a bolt or the like so as to be movable in a radial direction, and the fastening part 5e is screwed into the intermediate outer peripheral surface 1c of the nipple 1 so as to be firmly attached so as to be immovable.
Further, in an aspect shown in Fig. 4, a plurality of fastening parts 5e are arranged at a uniform interval in a circumferential direction; however, the arrangement and the number thereof are not limited to the illustrated example, but an other structure can be employed in correspondence to an intended use.

Accordingly, embodiment 2 shown in Figs. 3 and 4 can provide the same operation and effect as those of embodiment 1 mentioned above.
Further, in addition, there is an advantage that the rotational operation of the fastening member 3 and the loosely fitting portion 4 is not directly applied to the locking ring 5d of the stopper 5, and the loosely fitting portion 4 and the sleeve 2 neither are displaced nor come off, but can be safely used repeatedly. Embodiment 3

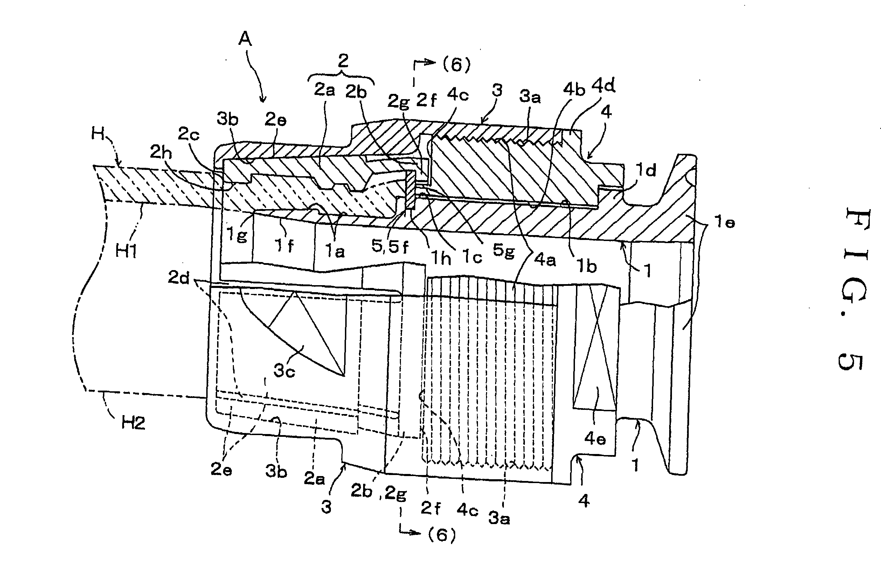

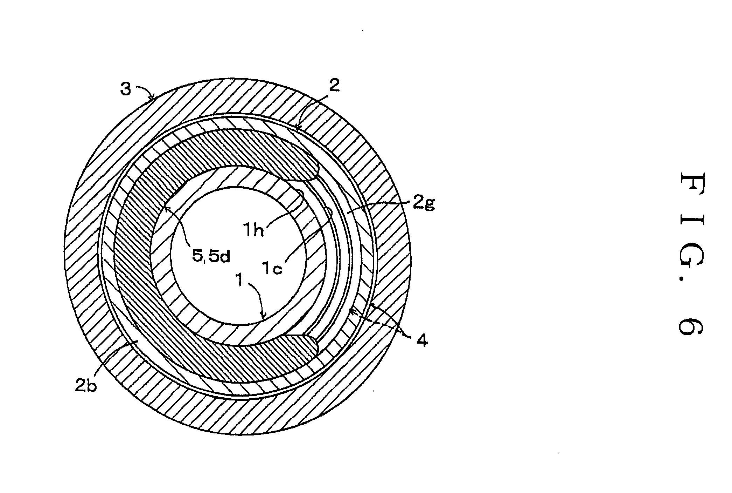

An embodiment 3 is different from the embodiment 1 shown in Figs. 1 and 2 and the embodiment 2 shown in Figs. 3 and 4 in a configuration in which a C-type stop ring 5f serving as said stopper 5 is fitted to a groove portion 1h provided in a concave manner on the intermediate outer peripheral surface 1c of the nipple 1 and is locked so as to be immovable in the axial direction, as shown in Figs. 5 and 6, thereby sandwiching the loosely fitting portion 4 by the base end side end surface 5g in the axial direction, and the loosely fitting portion 4 and the sleeve 2 are respectively positioned so as to be immovable in the axial direction by engaging the loosely fitting portion 4 with the hook-shaped locking portion 2g formed in the annular portion 2b of the sleeve 2, and is the same as the embodiment 1 shown in Figs. 1 and 2 and the embodiment 2 shown in Fig. 3 for the rest of the configuration.

Accordingly, the embodiment 3 shown in Fig. 3 can provide the same operation and effect as those of the embodiment 1 and the embodiment 2 mentioned above.
Further, in addition, there is an advantage that it is possible to simplify the positioning structure of the sleeve 2 and the loosely fitting portion 4 by easily attaching the stopper 5, and it is possible to intend to further reduce a cost by improving an assembling characteristic.

In this case, in the embodiments mentioned above, the rotation regulating portion 3c of the fastening member 3 is supported so as to be non-rotatable only in the peripheral direction by engaging a tool or the like therewith; however, the configuration is not limited to this, a rotation regulating means of the fastening member 3 can independently be provided and can be supported so as to be movable only in the axial direction without using any tool or the like.

Further, the structure in which the annular portion 2b of the sleeve 2 is attached to the intermediate outer peripheral surface 1c in the axial direction of said nipple 1 so as to be immovable in the axial direction is not limited to the illustrated example, but other structures may be employed as far as the sleeve 2 does not move in the axial direction even if the sleeve 2 is reduced in diameter on the basis of the movement in the axial direction of the fastening member 3.

### Description of Reference Numerals

A hose joint
H hose
H1 inner peripheral surface
H2 outer peripheral surface
1 nipple
1a outer peripheral surface (leading end side outer peripheral surface)
1b outer peripheral surface (base end side outer peripheral surface)
1c outer peripheral surface (intermediate outer peripheral surface)
1d locking projection
1e connecting portion
1f reverse taper surface
1g leading end edge
1h groove portion
2 sleeve
2 apressing tubular portion
2 bannular portion
2c leading end edge
2d screw slotting
2e chamfer
2f base end surface
2g locking portion
2h annular convex portion
3 fastening member
3a thread portion (female thread portion)
3b pressure inner surface
3c rotation regulating portion
4 loosely fitting portion
4a thread portion (male thread portion)
4b inner surface
4c leading end surface
4d stopper
4e rotational operating portion
5 stopper tool
5a screw stopper
5b base end portion
5c locking projection
5d locking ring
5e fastening part
5f C-type stop ring
5g base end side end surface

## Claims

1. A hose joint in which a hose (H) is attached along an outer peripheral surface (1a) of a nipple (1), a fastening member (3) is put on an outer periphery via a sleeve (2), and an inner peripheral surface (H1) of the hose (H) is closely attached to an outer peripheral surface (1a) of the nipple (1) by reducing diameter of the sleeve (2) in accordance with a movement in an axial direction of the fastening member (3),
wherein a loosely fitting portion (4) is rotatably fitted along an outer peripheral surface (1b) of said nipple (1), the loosely fitting portion (4) and the sleeve (2) are independently attached so as to be immovable in an axial direction, and a fastening member (3) is screwed on an outer peripheral surface of said loosely fitting portion (4) so as to be movable in an axial direction toward said sleeve (2).

2. A hose joint as claimed in claim 1, wherein a stopper tool (5) engaging with the sleeve (2) and the loosely fitting portion (4) in the axial direction is attached to an outer peripheral surface (1c) of said nipple (1), and the sleeve (2) and the loosely fitting portion (4) are locked so as to be respectively immovable in the axial direction.

3. A hose joint as claimed in claim 1 or 2, wherein a rotational operating portion (4e) is formed on an exposed outer periphery of said loosely fitting portion (4).
